# EUROPÄISCHE PATENTSCHRIFT

(11) **EP 0 450 270 B1**
(45) Veröffentlichungstag und Bekanntmachung des Hinweises auf die Patenterteilung: **22.03.1995**
(21) Anmeldenummer: 91100868.8
(22) Anmeldetag: 24.01.1991
(51) Int. Cl.: B60R 22/30, A44B 11/25

(54) **Schnellversteller für Gurtsysteme**
Belt length adjustment device
Dispositif d'ajustement rapide pour sangle

(30) Priorität: 09.02.1990 DE 9001502 U
(43) Veröffentlichungstag der Anmeldung: 09.10.1991
(73) Patentinhaber: Van Riesen & Co., D-25421 Pinneberg (DE)
(72) Erfinder: van Riesen, Reiner, W-2200 Elsmshorn (DE)
(74) Vertreter: Wilcken, Thomas, Dipl.-Ing.

(56) Entgegenhaltungen:
- DE-A- 3 330 734
- GB-A- 1 515 169

## Beschreibung

Die Erfindung geht aus von einem Schnellversteller zum Anpassen der Gurtlänge beispielsweise eines Gurt-Rückhaltesystems, bestehend aus einem Gehäuse mit einer in diesem angeordneten, U-förmigen Unterplatte mit einer einen Steg zur Befestigung eines Gurtteils ausbildenden Ausnehmung, einer zwischen den Schenkeln der Unterplatte verschiebbar angeführten Oberplatte mit einem Steg, der durch ein weiteres Gurtteil umschlingbar ist, sowie einer in dem Gehäuse angeordneten Drucktaste, die mittels Federkraft mit der Oberplatte in Eingriff steht und diese bei Betätigung gegenüber der Unterplatte verschiebt.

Ein derartiger Schnellversteller ist in der DE-A-33 30 734 beschrieben. Solche Versteller haben die Aufgabe, die Länge eines Gurtsystems den jeweiligen Erfordernissen anpaßbar zu machen und andererseits die vorgesehene Einstellung sicher zu fixieren. Die Verstellposition wird durch Betätigen einer Drucktaste erreicht, was bewirkt, daß der Gurt aus seiner bei unbetätigter Drucktaste wirksamen Klemmstellung freigestellt wird. Die Klemmstellung wird dabei durch Wirkung einer Rückstellfeder selbsttätig eingenommen, deren Rückstellkraft an der Drucktaste angreift.

Bei der bekannten Ausführung des Schnellverstellers ist die Rückstellfeder als Wickelfeder aus Stahldraht ausgebildet, die einen separaten Arbeitsgang bei der Montage des Schnellverstellers erfordert.

Es ist die Aufgabe der vorliegenden Erfindung, den Montageaufwand für die Feder zu reduzieren.

Diese Aufgabe wird erfindungsgemäß dadurch gelöst, daß die Drucktaste und die Rückstellfeder ein einstückiges Bauteil bilden, das aus einem zähelastischen Kunststoff besteht.

Bei einem Schnellversteller, bei dem die Drucktaste um einen zu dem Stegteil der Unterplatte senkrechten Achszapfen schwenkbar ist, kann die Rückstellfeder als Federzunge ausgebildet sein, wobei diese unter tangentialem Verlauf an einem zu dem Achszapfen konzentrischen Kreis an die Drucktaste angebunden sein kann. Dabei kann der Biegequerschnitt der Federzunge zwecks Erzielung einer über den gesamten Federweg im wesentlichen konstanten Rückstellkraft zu ihrem freien Ende hin abnehmend ausgeführt sein.

Die Erfindung ist nachstehend anhand eines in der Zeichnung dargestellten Ausführungsbeispieles näher erläutert. Es zeigen:
- Figur 1: eine Gesamtansicht des Schnellverstellers in axonometrischer Darstellung,
- Figur 2: einen Längsschnitt durch den Schnellversteller nach Figur 1,
- Figur 3: eine Ansicht des Einzelteils Drucktaste.

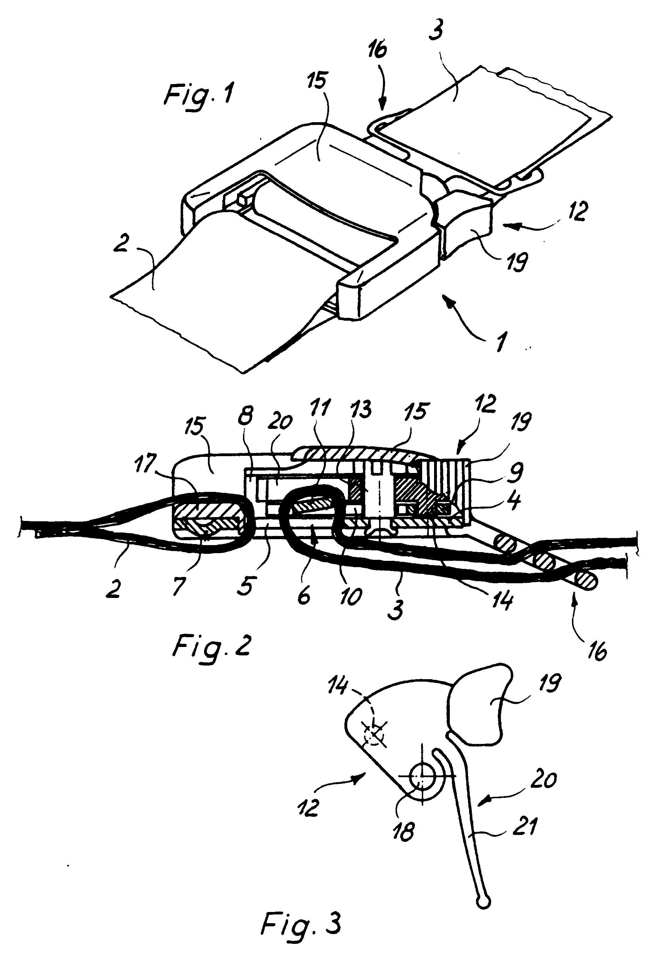

Wie aus den Figuren 1 und 2 ersichtlich ist, ist der Schnellversteller 1 als Verbindungseinrichtung zwischen den Enden zweier Gurtteile 2 und 3 vorgesehen. Der Schnellversteller 1 besteht aus einer U-förmigen Unterplatte 4 mit einer in dessen Mittelbereich 5 befindlichen Ausnehmung 6, die einen Steg 7 zur Befestigung des Gurtteils 2 ausbildet. Zwischen den Schenkein 8 der Unterplatte 4 ist eine Oberplatte 9 verschiebbar geführt, die dabei auf der Fläche des Mittelbereichs 5 gleitet. Die Oberplatte weist einen Querschlitz 10 auf, der einen Steg 11 ausbildet, der im Bereich der Ausnehmung 6 zuliegen kommt.

Die Verschiebung der Oberplatte 9 erfolgt durch eine Drucktaste 12,die um einen Achszapfen 13 schwenkbar gelagert ist und mit einem Zapfen 14 in eine entsprechende Aussparung in der Oberplatte 9 eingreift. Der Achszapfen 13 ragt von der Innenfläche eines Gehäuses 15 aus einem elastischen Kunststoff auf, das die Unterplatte 4 übergreift und an derselben mittels Schnappverbindungen befestigbar ist. An einem Ende des Gehäuses ist eine Gurtführung 16 für den Gurtteil 3 angeordnet, während das, andere Ende einen Steg 17 aufweist, der nach dem Überstülpen des Gehäuses 15 über die Unterplatte 4 auf deren Steg 7 zur Auflage kommt, so daß dieser von dem Gurtteil 2 mit umschlingbar ist.

Die aus einem zähelastischen Kunststoff bestehende Drucktaste 12 weist gemäß Figur 3 im wesentlichen die Gestalt eines Viertelkreissegmentes auf. Im Mittelpunkt dieses Kreissegmentes ist eine Achsbohrung 18 für die Schwenkachse 13 vorgesehen, und von der Segmentfläche steht der Kurbelzapfen 14 für den Eingriff in die Oberplatte 9 vor. Das Viertelkreissegment ragt mit einem Tastkopf 19 aus dem Gehäuse 15 heraus, wobei der entsprechende Ausschnitt in dem Gehäuse 15 eine Schwenkung der Drucktaste 12 um ca. 45° zuläßt. Die Schwenkbewegung erfolgt gegen die Kraft einer Rückstellfeder 20, die als Federzunge 21 ausgestaltet ist, die mit der Drucktaste 12 ein einstückiges Bauteil bildet. Dabei ist die Federzunge 21 unter tangentialem Verlauf an einen zu der Achsbohrung 18 konzentrischen Kreis an das Viertelkreissegment der Drucktaste 12 angebunden. In montiertem Zustand stützt sich die Federzunge 21 mit ihrem freien Ende an der Innenseite eines der Schenkel 8 der Unterplatte 4 ab und greift der Achszapfen 13 mit seinem freien Ende in eine entsprechende Bohrung in der Unterplatte 4 ein.

Der beschriebene Schnellversteller wird für die bestimmungsgemäße Anwendung mit dem Gurtteil 2 versehen, in dem dieser Gurt mittels einer die Stege 7 und 17 umschlingenden Schlaufe werkseitig an dem Schnellversteller befestigt wird. Der Gurtteil 2 kann andernends mit einem üblichen Endstück in Form einer Zunge versehen sein, die in ein Gurtschloß einführbar und dort verriegelbar ist. Um den Gurtteil 3 an dem Schnellversteller anzubringen, wird die Drucktaste 12 betätigt, was bewirkt, daß der Steg 11 der Oberplatte 9 über der Ausnehmung 6 in der Unterplatte 4 zuliegen kommt. Das freie Ende des Gurtteils 3 kann nunmehr durch einen Schlitz in der Gurtführung 16, dann durch die Ausnehmung 6 hindurch, um den Steg 11 herum, wieder durch die Ausnehmung 6 und schließlich durch einen zweiten Schlitz in der Gurtführung 16 hindurchgeführt werden, Bei Freigeben der Drucktaste 12 wird die Oberplatte 9 mit dem durch den Gurtteil 3 umschlungenen Steg 11 durch Wirkung der Rückstellfeder 20 verschoben, wobei eine Klemmung des Gurtes zwischen Oberplatte 9 und Unterplatte 4 erfolgt. Diese Klemmung ist selbsthemmend, da ein Spannen des Gurtsystems eine Verstärkung der Klemmung bewirkt. Durch Betätigen der Drucktaste 12 wird die Klemmung aufgehoben, so daß die erforderliche Gurtlänge leicht eingestellt werden kann.

## Patentansprüche

1. Schnellversteller zum Anpassen der Gurtlänge beispielsweise eines Gurt-Rückhaltesystems, bestehend aus einem Gehäuse (15) mit einer in diesem angeordneten, U-förmigen Unterplatte (4) mit einer einen Steg (7) zur Befestigung eines Gurtteils ausbildenden Ausnehmung (6), eine zwischen den Schenkein der U-förmigen Unterplatte (4) verschiebbar geführten Oberplatte (9) mit einem Steg (11), der durch ein weiteres Gurtteil umschlingbar ist, sowie einer in dem Gehäuse angeordneten Drucktaste (12), die mittels Federkraft mit der Oberplatte (9) in Eingriff steht und diese bei Betätigung gegenüber der Unterplatte verschiebt, dadurch gekennzeichnet, daß die Drucktaste (12) und die Rückstellfeder (20) ein einstückiges Bauteil bilden, das aus einem zähelastischen Kunststoff besteht.

2. Schnellversteller nach Anspruch 1, dadurch gekennzeichnet, daß die Rückstellfeder (20) als Federzunge (21) ausgebildet ist, wobei diese unter tangentialem Verlauf an einem zu einem Achszapfen (13) konzentrischen Kreis an die Drucktaste (12) angebunden ist.

3. Schnellversteller nach Anspruch 2, dadurch gekennzeichnet, daß der Biegequerschnitt der Federzunge (21) zwecks Erzielung einer über den gesamten Federweg im wesentlichen konstanten Rückstellkraft zu ihrem freien Ende hin abnehmend ausgeführt ist.

## Claims

1. A quick adjuster to adapt the belt length for example of a belt-restraining system, consisting of a housing (15) with a U-shaped lower plate (4), arranged therein, with a recess (6) forming a cross-piece (7) for the securing of a part of the belt, an upper plate (9) guided to as to be displaceable between the shanks of the U-shaped lower plate (4), with a cross-piece (11), which is able to be looped around by a further belt part, and also with a push-button (12) arranged in the housing, which is in engagement with the upper plate (9) by means of spring tension and displaces the latter with respect to the lower plate on actuation, characterised in that the push-button (12) and the restoring spring (20) form a component in a single piece, which consists of a tough elastic plastic.

2. A quick adjuster according to Claim 1, characterised in that the restoring spring (20) is constructed as a spring tongue (21), in which the latter is linked to the push-button (12) under a tangential course to a circle concentric to an axle journal (13).

3. A quick adjuster according to Claim 2, characterised in that the bending cross-section of the spring tongue (21) is constructed so as to be decreasing towards its free end, in order to achieve a substantially constant restoring force over the entire spring course.

## Revendications

1. Dispositif d'ajustement rapide pour l'adaptation de la longueur de la ceinture, par exemple d'un système de retenue à ceinture constitué par un boîtier (15) comportant une plaque inférieure (4) en forme de U, disposée dans ce boîtier et comportant une ouverture (6) formant une barrette (7) pour la fixation d'une partie de la ceinture, une plaque supérieure (9) qui est guidée, de manière à être déplaçable, entre les branches de la plaque inférieure (4) en forme de U et comportant une barrette (11), autour de laquelle peut s'enrouler une autre partie de la ceinture, ainsi qu'un bouton-poussoir (12) disposé dans le boîtier et qui engrène avec la plaque supérieure, sous l'action de la force d'un ressort et, lors d'un actionnement, déplace cette plaque par rapport à la plaque inférieure, caractérisé en ce que le bouton-poussoir (12) et le ressort de rappel (20) forment un composant monobloc, qui est réalisé en une matière plastique viscoélastique.

2. Dispositif d'ajustement rapide selon la revendication 1, caractérisé en ce que le ressort de rappel (20) est réalisé sous la forme d'une languette élastique (21), cette dernière étant réunie au bouton-poussoir (12) en s'étendant tangentiellement à un cercle concentrique à un tourillon d'axe (13).

3. Dispositif d'ajustement rapide selon la revendication 2, caractérisé en ce que la section transversale de flexion de la languette élastique (21) est agencée de manière à diminuer en direction de son extrémité libre, pour l'obtention d'une force de rappel sensiblement constante sur l'ensemble de la course du ressort.
